# EUROPÄISCHE PATENTSCHRIFT

(11) **EP 4 205 506 B1**
(45) Veröffentlichungstag und Bekanntmachung des Hinweises auf die Patenterteilung: **03.04.2024**
(21) Anmeldenummer: 21765664.4
(22) Anmeldetag: 24.08.2021
(51) Int. Cl.: H05B 3/34, E01C 11/26, H02S 40/30

(54) **PFLASTERPLATTE, PFLASTERSYSTEM UND VERFAHREN ZUR HERSTELLUNG DER PFLASTERPLATTE**
FLAT HEATING MODULE, FLAT HEATING BODY, PAVING STONE, PAVING SYSTEM AND METHOD FOR MANUFACTURING THE HEATING MODULE
MODULE CHAUFFANT PLAT, RADIATEUR PLAT, PLAQUE DE PLÂTRE, SYSTÈME DE PLÂTRE ET PROCÉDÉ DE FABRICATION DE MODULE CHAUFFANT

(30) Priorität: 25.08.2020 EP 20192583
(43) Veröffentlichungstag der Anmeldung: 05.07.2023
(73) Patentinhaber: CT-Coating AG, 53639 Königswinter (DE)
(72) Erfinder: HÖLZENBEIN, Ernst, 56812 Cochem (DE)
(74) Vertreter: Müller-Boré & Partner Patentanwälte PartG mbB
(86) Internationale Anmeldenummer: PCT/EP2021/073398
(87) Internationale Veröffentlichungsnummer: WO 2022/043328

(56) Entgegenhaltungen:
- CN-A- 105 546 627
- CN-A- 107 288 010
- CN-A- 108 894 072
- CN-B- 107 938 462
- CN-U- 205 917 555
- FR-A1- 3 016 257
- JP-A- 2002 021 036
- US-B1- 8 907 202

## Beschreibung

### Technisches Gebiet

Die Erfindung betrifft ein Verfahren zur Herstellung einer Pflasterplatte zum Pflastern einer Verkehrsfläche, die Pflasterplatte umfassend einen Plattenkorpus mit zumindest einer Aussparung, ein in der zumindest einen Aussparung angeordnetes Modul, wobei sich das Modul flächig entlang einer Modulebene erstreckt, und zumindest ein flächiges, entlang der Modulebene ausgerichtetes und zumindest abschnittsweise transluzentes Deckelement zum Schutz des zumindest einen Moduls.

### Stand der Technik

Aus dem Stand der Technik, beispielsweise aus den Druckschriften FR 3 016 257 A1, JP 2002-21036 A, CN 107288010 A, CN 105546627 A, CN 108894072 A, CN 205917555 U, US 8 907 202 B1 oder CN 107938462 B) sind Bauteile für Verkehrswege mit Zusatzfunktionen, beispielsweise zur Beleuchtung des Verkehrswegs, zur Beheizung des Verkehrswegs, zur Energiegewinnung, zur Energiespeicherung oder zur induktiven Ladung von Elektrofahrzeugen, bekannt. Nachteilig an den bekannten Bauteilen sind vor allem ihre hohen Herstellungskosten durch einen komplexen Aufbau und ihre geringe Lebensdauer beim Einsatz in einem Verkehrsweg, beispielsweise aufgrund von Beschädigungen durch mechanische Belastungen, insbesondere durch Vibrationen, durch Temperaturschwankungen oder durch eindringendes Wasser, insbesondere durch eindringendes Salzwasser.

### Technische Aufgabe

Die Aufgabe der Erfindung ist es, ein kostengünstiges und zuverlässiges Herstellungsverfahren für die Bauelemente für Verkehrswege mit Zusatzfunktionen bereitzustellen, die eine verlängerte Lebensdauer aufweisen.

### Technische Lösung

Die vorliegende Erfindung stellt ein Verfahren zur Herstellung einer Pflasterplatte gemäß Anspruch 1 bereit, das die technische Aufgabe löst. Vorteilhafte Ausgestaltungen ergeben sich aus den abhängigen Ansprüchen.

### Beschreibung der Ausführungsarten

Die Erfindung betrifft ein Verfahren zur Herstellung einer Pflasterplatte zum Pflastern einer Verkehrsfläche, wobei die Pflasterplatte einen Plattenkorpus mit zumindest einer Aussparung umfasst, wobei in der zumindest einen Aussparung ein Modul angeordnet ist, wobei sich das Modul flächig entlang einer Modulebene erstreckt. Das heißt, eine Länge und eine zu der Länge orthogonale Breite des Moduls entlang der Modulebene sind jeweils wesentlich größer als eine Höhe des Moduls senkrecht zur Modulebene. Beispielsweise sind die Länge und/oder die Breite zumindest zehnmal so groß, insbesondere zumindest hundertmal so groß, wie die Höhe.

Das Modul kann beispielsweise im Wesentlichen quaderförmig sein.

Das Modul umfasst vorzugsweise zumindest eine entlang der Modulebene ausgerichtete, flächige Heizschicht zur Beheizung einer Umgebung des Moduls.

Die Heizschicht hat beispielsweise eine Dicke senkrecht zur Modulebene von 6 µm bis 60 µm. Die Heizschicht enthält beispielsweise Kohlenstoff-Nanoröhrchen, organische Lösungen, Emulgatoren, Verdicker, Verdünner, Konditionierer, Viskositätsmittel, Kleber und/oder Anti-Oxidationsmittel. Die als Heizschicht eingesetzten Materialien wandeln vorteilhafterweise nahezu 100 % der über die Heizspannung eingespeisten elektrischen Energie in Wärme um.

Die Heizschicht ist vorzugsweise zum Heizen bis zu einer Maximaltemperatur von 523 K ausgebildet.

Die Heizschicht umfasst beispielsweise eine Anzahl von Leiterbahnen, die senkrecht zur Modulebene zwischen zwei elektrischen Isolierlagen eingebettet sind. Die Heizschicht kann beispielsweise so aufgebaut sein, wie das in DE 203 19 024 U1 beschriebene Flächenheizelement oder die in WO 93/23968 A1 beschriebene Widerstands-Heizeinheit ("resistor heating unit 19"). Die entsprechenden Absätze [0016] bis [0026] von DE 203 19 024 U1 sowie die Figuren 7a und 7b mit deren Beschreibung auf Seite 12 von WO 93/23968 A1 sind hier durch Bezugnahme aufgenommen.

Das Modul umfasst vorzugsweise zumindest eine entlang der Modulebene ausgerichtete, flächige Energiespeicherschicht zur Speicherung elektrischer Energie, wobei vorzugsweise zwischen der Heizschicht und der Energiespeicherschicht eine entlang der Modulebene ausgerichtete, flächige thermische Isolierschicht angeordnet ist.

Durch die Energiespeicherschicht kann das Modul vorteilhafterweise unabhängig von einer externen Energieversorgung betrieben werden. Weiterhin kann die Energiespeicherschicht dann aufgeladen werden, wenn besonders viel und kostengünstige elektrische Energie, beispielsweise aus Windkraftanlagen oder Photovoltaikanlagen, verfügbar ist, und die gespeicherte Energie kann zu einem späteren Zeitpunkt, wenn weniger elektrische Energie verfügbar ist, verbraucht werden. Dadurch werden die Betriebskosten des Moduls minimiert und Schwankungen in der Energieversorgung ausgeglichen, ohne dass dazu ein zusätzlicher, teurer und platzraubender Energiespeicher notwendig wäre.

Die Integration einer Energiespeicherschicht in das Modul ist dadurch erschwert, dass die meisten fachüblichen Energiespeicher, insbesondere aufgrund der darin enthaltenen Flüssigkeiten, keinen hohen Temperaturen von beispielsweise über 60 °C, insbesondere über 85 °C, ausgesetzt werden dürfen.

Die thermische Isolierschicht schützt die Energiespeicherschicht vor einer Überhitzung durch die Heizschicht, insbesondere wenn die Heizschicht mit einer hohen Temperatur betrieben wird, um mit einem kompakten Modul einen großen Raum zu beheizen.

Das Modul umfasst zumindest eine flächige, entlang der Modulebene ausgerichtete Photovoltaikschicht zur Gewinnung elektrischer Energie. Mit Hilfe der Photovoltaikschicht kann die Heizschicht vorteilhafterweise ohne externe Energieversorgung mit Energie versorgt werden. Selbstverständlich kann das Modul, auch wenn eine Photovoltaikschicht vorhanden ist, dennoch einen Anschluss für eine externe Energieversorgung umfassen, um die Heizschicht zu versorgen und/oder von der Photovoltaikschicht gewonnenen Energie an die externe Energieversorgung abzugeben.

Vorzugsweise umfasst das Modul zumindest eine Energiespeicherschicht und zumindest eine Photovoltaikschicht. Dadurch kann die von der Photovoltaikschicht gewonnene Energie in der Energiespeicherschicht zwischengespeichert und zu einem späteren Zeitpunkt, insbesondere während die Photovoltaikschicht keine ausreichende Leistung zum Betrieb der Heizschicht liefert, zum Betrieb der Heizschicht verwendet werden.

Das Modul umfasst zumindest eine entlang der Modulebene ausgerichtete, flächige, flexible, Leuchtschicht zur Beleuchtung einer Umgebung des Moduls, wobei die Leuchtschicht eine Mehrzahl von entlang der Modulebene ausgerichteten Materiallagen mit voneinander unterschiedlichen Materialzusammensetzungen umfasst.

Durch die Integration der Leuchtschicht in das Modul kann eine Umgebung des Moduls ohne separate Leuchten beleuchtet werden, sodass beispielsweise die Beheizung und Beleuchtung der Umgebung mit besonders geringem Investitions- und Platzbedarf sichergestellt werden kann.

Die zumindest eine Leuchtschicht und die zumindest eine Photovoltaikschicht, insbesondere alle genannten Schichten, umfassen jeweils eine Mehrzahl von entlang der Modulebene ausgerichteten Materiallagen mit voneinander unterschiedlichen Materialzusammensetzungen.

Durch den Aufbau der Schichten aus entlang der Modulebene ausgerichteten Materiallagen können die Schichten besonders einfach, schnell und kostengünstig hergestellt werden, beispielsweise mit einem Druckverfahren, insbesondere mit einem Siebdruckverfahren.

Vorzugsweise erstrecken sich die Materiallagen jeweils über eine gesamte Fläche des Moduls entlang der Modulebene. Dadurch können die Materiallagen auf besonders einfache Weise hergestellt werden.

Die Photovoltaikschicht ist vorzugsweise als low-light-condition-Solarmodul und/oder als Dünnschichtsolarmodul ausgestaltet, umfassend beispielsweise amorphes Silicium (a-Si:H), mikrokristallines Silicium (µc-Si:H), Gallium-Arsenid (GaAs), Cadmiumtellurid (CdTe) oder Kupfer-Indium-(Gallium)-Schwefel-Selen-Verbindungen als photoaktives Material.

In einer weiteren vorteilhaften Ausführungsform umfasst die Photovoltaikschicht senkrecht zur Modulebene übereinander wenigstens eine transluzente Frontelektrodenlage und/oder danach mittelbar oder unmittelbar wenigstens eine Trägerstrukturlage zur mechanischen Stabilisierung und/oder danach mittelbar oder unmittelbar wenigstens eine Photoaktivlage mit einem photoaktiven Material und/oder danach mittelbar oder unmittelbar wenigstens eine Transportlage und/oder danach mittelbar oder unmittelbar wenigstens eine Backelektrodenlage und/oder danach mittelbar oder unmittelbar wenigstens eine Verkapselungslage, wobei zwischen transparenter Frontelektrodenlage und Backelektrodenlage vorteilhaft eine Spannung anlegbar ist.

Denkbar ist, dass dabei auf die Transportlage und die Trägerstrukturlage verzichtet wird. Dies ist vorteilhaft, da auf diese Weise eine besonders dünne Ausführungsform möglich ist. Nachteilig ist die jedoch, da die Transportlage zur Aufrechterhaltung der Ladungstrennung besonders gute Eigenschaften aufweist. Zudem ist es denkbar, dass das photoaktive Material ohne eine stabilisierende Trägerstrukturlage seine Wirkung einbüßt. Für die Trägerstrukturlage sind beispielsweise Gläser, PMMA, Metallfolien, Plastikfolien denkbar. Für die Transportlage sind negative und positive Ausbildungen aus organischen und/oder anorganischen Stoffen denkbar. Sie haben die Aufgabe, die Elektronen besser zu transportieren.

Vorteilhaft ist die Verkapselungslage als elektrische Isolationslage, beispielsweise aus einem Kunststoff, ausgebildet. Wenn die Photovoltaikschicht an eine weitere Schicht angrenzt, die an einer der Photovoltaikschicht zugewandten Seite eine Verkapselungslage aufweist, kann die Photovoltaikschicht vorteilhafterweise an der der weiteren Schicht zugewandten Seite ohne Verkapselungslage ausgestaltet sein. Dadurch ist eine besonders materialsparende und schnelle Herstellung möglich.

Die zur Backelektrode angrenzende Verkapselungslage weist vorteilhaft eine Dicke zwischen 500 nm und 250 µm auf. Die Backelektrodenlage weist vorteilhaft eine Dicke zwischen 100 nm und 15 µm auf. Die Transportlage weist vorteilhaft eine Dicke zwischen 50 nm und 5 µm auf. Die Photoaktivlage weist vorteilhaft eine Dicke zwischen 50 nm und 5 µm auf. Die Trägerstrukturlage weist vorteilhaft eine Dicke zwischen 100 nm und 5 µm auf. Die Frontelektrodenlage weist vorteilhaft eine Dicke zwischen 100 nm und 5 µn auf. Die zur Frontelektrode angrenzende Verkapselungslage weist vorteilhaft eine Dicke zwischen 20 µm und 250 µm auf.

Die Energiespeicherschicht ist vorzugsweise gegenüber einer Temperatur von zumindest 60 °C, insbesondere zumindest 85 °C, bevorzugt zumindest 120 °C, beständig. Durch diese gegenüber fachüblichen Energiespeichern, beispielsweise Lithium-Ionen-Akkumulatoren, erhöhte Wärmebeständigkeit kann die Energiespeicherschicht vorteilhafterweise in einem kompakten Modul mit der Heizschicht kombiniert werden, ohne dass die Energiespeicherschicht durch von der Heizschicht abgegebene Wärme beschädigt wird.

Die Energiespeicherschicht kann flüssigkeitsfrei ausgebildet sein, Natrium-Ionen und insbesondere keine Lithium-Ionen als bewegliche Ladungsträger enthalten und/oder frei von Fehlstellen (sogenannten "Pinholes") ausgebildet sein. Jedes dieser Merkmale und insbesondere eine Kombination mehrerer dieser Merkmale erhöht vorteilhafterweise die Wärmebeständigkeit der Energiespeicherschicht.

Die Energiespeicherschicht umfasst vorzugsweise wenigstens zwei Elektrodenlagen, dazwischen wenigstens eine Separatorlage mit einem Elektrolyten und an den Außenseiten je wenigstens eine Verkapselungslage. Vorteilhaft ist die Verkapselungslage jeweils als elektrische Isolationslage, beispielsweise aus einem Kunststoff, ausgebildet.

Wenn die Energiespeicherschicht an eine weitere Schicht angrenzt, die an einer der Energiespeicherschicht zugewandten Seite eine Verkapselungslage aufweist, kann die Energiespeicherschicht vorteilhafterweise an der der weiteren Schicht zugewandten Seite ohne Verkapselungslage ausgestaltet sein. Dadurch ist eine besonders materialsparende und schnelle Herstellung möglich.

Zumindest eine Elektrodenlage umfasset vorzugsweise ein Metall, insbesondere Lithium oder Natrium, Kohlenstoff, insbesondere in Form von Aktivkohle, Aktivkohlefaser, Carbid-abgeleitetem Kohlenstoff, Kohlenstoff-Aerogel, Graphit, Graphen und/oder Kohlenstoffnanoröhren, ein Übergangsmetalloxid, beispielsweise ein Oxid von Ruthenium, Iridium, Eisen und/oder Mangan, und/oder ein elektrisch leitfähiges Polymer, beispielsweise Polypyrrol, Polyanilin, Pentacen oder Polythiophen.

Die Separatorlage umfasst beispielsweise einen porösen Kunststoff und/oder eine poröse Keramik. Der Elektrolyt umfasst beispielsweise eine wässrige Elektrolytlösung, eine organische Elektrolytlösung, eine ionische Flüssigkeit, einen superkonzentrierten Elektrolyten, ein für Ionen leitfähiges Polymer und/oder eine für Ionen leitfähige Keramik, z.B. Ag₄Rbl₅ für den Ladungstransport von Ag⁺-Ionen, ein closo-Boran für den Ladungstransport von Na⁺-Ionen oder eine LiI/Al₂O₃-Mischung für den Ladungstransport von Li⁺-Ionen.

Die Energiespeicherschicht ist vorzugsweise als Festkörperakkumulator, beispielsweise als Lithium-Luft-Festkörperakkumulator, oder als Superkondensator ausgebildet.

Eine Dicke senkrecht zur Modulebene beträgt für die Verkapselungslagen vorteilhaft 20 µm bis 250 µm, für die Elektrodenlagen vorteilhaft 3 µm bis 250 µm und/oder für die Separatorlage vorteilhaft 0,5 µm bis 250 µm.

Die zumindest eine Leuchtschicht, die zumindest eine Heizschicht, die zumindest eine Energiespeicherschicht und/oder die zumindest eine Photovoltaikschicht sind vorzugsweise senkrecht zur Modulebene übereinander angeordnet. Dadurch lassen sich die Schichten besonders einfach, beispielsweise mit einem Druckverfahren, insbesondere mit einem Siebdruckverfahren, nacheinander auf ein Substrat aufbringen.

Eine Schichtdicke der zumindest einen Leuchtschicht, der zumindest einen Heizschicht, der zumindest einen Energiespeicherschicht und/oder der zumindest einen Photovoltaikschicht senkrecht zur Modulebene beträgt vorzugsweise jeweils von 0,1 µm bis 1 mm, bevorzugt von 0,5 µm bis 0,2 mm.

Die zumindest eine Leuchtschicht, die zumindest eine Photovoltaikschicht und das gesamte Modul ist flexibel ausgestaltet. Dadurch wird vorteilhafterweise eine Gefahr von Beschädigungen durch mechanische Belastungen verringert. Dadurch unterscheidet sich das erfindungsgemäße Modul von bekannten Photovoltaikmodulen oder Leuchtmodulen, die starr sind, sodass sie durch mechanische Belastungen, insbesondere durch Vibrationen, beim Einsatz in einem Verkehrsweg leicht beschädigt werden können.

Die Isolierschicht umfasst vorzugsweise ein Calcium-Silikat, Chitosan und einen hitzebeständigen Binder. Mit den genannten Inhaltsstoffen lässt sich auf einfache Weise, beispielsweise durch Siebdrucken, eine besonders dünne und flexible Isolierschicht mit einer geringen Wärmeleitfähigkeit herstellen.

Die Isolierschicht kann PET, PVC, organische Lösungen, Emulgatoren, Verdicker, Verdünner, Konditionierer, Viskositätsmittel, Kleber und/oder Anti-Oxidationsmittel umfassen.

Die Isolierschicht weist vorzugsweise eine Schichtdicke von 10 µm bis 500 µm, bevorzugt von 40 µm bis 100 µm, auf.

Bei einer vorteilhaften Ausführungsform ist die Photovoltaikschicht als zumindest bereichsweise transluzente, insbesondere transparente, Schicht ausgebildet, insbesondere derart, dass senkrecht zur Modulebene die wenigstens eine Leuchtschicht und die Photovoltaikschicht übereinander angeordnet sind. Wenn die Photovoltaikschicht transluzent ausgebildet ist, kann sie bei Abnahme des einstrahlenden Lichtes, zum Beispiel in der Abenddämmerung, als durchlässige Schicht für das Licht der Leuchtschicht Verwendung finden.

Dabei ist denkbar, dass eine Durchkontaktierung zwischen der Photovoltaikschicht und einer Energiespeicherschicht durch die Leuchtschicht hindurch das Übertragen der in der Photovoltaikschicht erzeugten elektrischen Energie in die Energiespeicherschicht ermöglicht. Eine weitere Kontaktierung ermöglicht vorteilhaft das Freisetzen der in der Energiespeicherschicht gespeicherten Energie für die Versorgung der Leuchtschicht.

In einer weiteren vorteilhaften Ausführungsform ist die wenigstens eine Photovoltaikschicht opak ausgebildet. Dies ist besonders vorteilhaft, da Photovoltaikschichten, die nicht transparent ausgebildet sind, einen größeren Wirkungsgrad gegenüber transparenten Photovoltaikschichten aufweisen.

Die Photovoltaikschicht und die Leuchtschicht können entlang der Modulebene nebeneinander oder ineinander angeordnet sein, damit sie sich nicht gegenseitig bei einer Lichtaufnahme beziehungsweise Lichtabgabe senkrecht zur Modulebene behindern. Nachteilig dabei ist, dass nicht jeweils die ganze Fläche des Moduls für die Photovoltaikschicht und die Leuchtschicht zur Verfügung steht. Vorteilhaft ist, dass eine Energiespeicherschicht sowohl angrenzend zu der Photovoltaikschicht als auch angrenzend zu der Leuchtschicht angeordnet werden kann, was einen besonders effizienten Energietransport ermöglicht.

Vorzugsweise ist eine Induktionsschicht des Moduls und/oder die zumindest eine Energiespeicherschicht zumindest bereichsweise transluzent, insbesondere transparent. Durch diese Ausgestaltungen kann Licht von der Leuchtschicht oder Photovoltaikschicht durch die Energiespeicherschicht und/oder Induktionsschicht hindurch aufgenommen oder abgegeben werden, sodass die Schichtabfolge beispielsweise für eine möglichst einfache Herstellung oder eine effiziente Verbindung der einzelnen Schichten optimiert sein kann.

Das Modul umfasst zumindest ein sich flächig entlang der Modulebene erstreckendes, flexibles Trägerelement, auf das die zumindest eine Leuchtschicht und die zumindest eine Photovoltaikschicht mit einem Siebdruckverfahren aufgebracht sind.

Die Schichten können einseitig oder beidseitig auf den Flächenseiten des Trägerelements aufgebracht sein. Eine einseitige Aufbringung erlaubt eine besonders schnelle Herstellung. Eine beidseitige Aufbringung sorgt durch die Anordnung des Trägerelements zwischen den Schichten für eine besonders hohe mechanische Stabilität. Beispielsweise können die Heizschicht auf einer Flächenseite und eine Energiespeicherschicht auf der gegenüberliegenden Flächenseite des Trägerelements aufgebracht sein, wodurch das Trägerelement vorteilhafterweise zur thermischen Isolierung der Energiespeicherschicht von der Heizschicht beiträgt.

Das Trägerelement umfasst beispielsweise einen Kunststoff, insbesondere PET, ein Polyimid, PMMA und/oder ein Polycarbonat, und/oder ein Metall. Vorteilhafterweise ist das Trägerelement rechteckig ausgebildet. Das Trägerelement ist vorzugsweise folienartig und biegsam ausgestaltet. Dadurch kann das gesamte Modul dünn und biegsam ausgestaltet werden. Das Trägerelement umfasst beispielsweise eine Kunststofffolie und/oder Metallfolie mit einer Dicke von 1 µm bis 1 mm, insbesondere von 5 µm bis 50 µm. Das Trägerelement umfasst insbesondere eine PET-Folie mit einer Dicke von 5 µm bis 50 µm.

Das Trägerelement verleiht dem Modul vorteilhafterweise eine ausreichende mechanische Stabilität, damit das Modul bei seiner Herstellung, Weiterverarbeitung oder Benutzung nicht beschädigt wird.

Das Modul umfasst vorzugsweise zumindest eine, bevorzugt flexible, Verkapselungsschicht zum Schutz zumindest der zumindest einen Leuchtschicht, der zumindest einen Heizschicht, der zumindest einen Energiespeicherschicht und/oder der zumindest einen Photovoltaikschicht vor Umwelteinflüssen, insbesondere vor Feuchtigkeit und/oder mechanischen Belastungen.

Die Verkapselungsschicht umfasst beispielsweise einen Kunststoff, insbesondere PET, ein Polyimid, PMMA und/oder ein Polycarbonat. Die Verkapselungsschicht ist vorzugsweise durch Siebdruck auf das Trägerelement aufgebracht.

Das Trägerelement und/oder die Verkapselungsschicht ist bevorzugt zumindest abschnittsweise transluzent, insbesondere transparent. Dies ist besonders vorteilhaft, um durchlässig für das von der zumindest einen Photovoltaikschicht aufgenommene Licht oder von einer Leuchtschicht abgegebene Licht zu sein.

Das Modul umfasst vorzugsweise zumindest eine entlang der Modulebene ausgerichtete, flächige, bevorzugt flexible, Induktionsschicht zum induktiven Laden eines an dem Modul angeordneten elektronischen Geräts, bevorzugt eines Elektrofahrzeugs, wobei die zumindest eine Induktionsschicht eine Mehrzahl von entlang der Modulebene ausgerichteten Materiallagen mit voneinander unterschiedlichen Materialzusammensetzungen umfasst.

Mit der Induktionsschicht kann das elektronische Gerät kabellos aufgeladen werden, sodass das Modul eine weitere Funktionalität bereitstellt, ohne dafür wesentlich mehr Platz zu beanspruchen oder zusätzliche Installationsarbeiten zu erfordern. Insbesondere kann bei einer Anordnung des Moduls in einem Boden eines Parkplatzes das bisher sehr unpraktische Aufladen von Elektrofahrzeugen mit Hilfe der Induktionsschicht des Moduls wesentlich vereinfacht werden.

Für Kommunen und private Eigentümer ist es mit erheblichem personellem und materiellem Aufwand verbunden, gepflasterte Verkehrsflächen, beispielsweise Gehwege, Radwege, Straßen, Parkplätze und andere Plätze im Winter von Schnee und Eis zu befreien. Außerdem führen die dazu häufig verwendeten Taumittel, insbesondere Streusalz, zu verstärkter Korrosion von Fahrzeugen und Verätzungen von Tieren und Pflanzen. Durch eine gezielte Beheizung der Verkehrsflächen mit der Heizschicht des Moduls einer erfindungsgemäßen Pflasterplatte können diese vorteilhafterweise ohne personellen und materiellen Aufwand und ohne Einsatz von Taumitteln von Schnee und Eis freigehalten werden.

Wenn das Modul eine Photovoltaikschicht umfasst, ergibt sich daraus der zusätzliche Vorteil, dass die Zusatzkosten einer Pflasterplatte mit Modul gegenüber einer fachüblichen Pflasterplatte durch Verkauf oder Eigennutzung der gewonnenen elektrischen Energie ausgeglichen oder sogar überkompensiert werden können. Außerdem können die ökologischen Nachteile gepflasterter Verkehrsflächen, insbesondere durch die von ihnen verursachte Bodenversiegelung, durch die Gewinnung erneuerbarer Energie zumindest teilweise ausgeglichen werden.

Der Plattenkorpus kann eine beliebige, für fachübliche Pflasterplatten bekannte Form und/oder Größe haben, insbesondere kann der Plattenkorpus im Wesentlichen quaderförmig sein.

Der Plattenkorpus kann beliebige, für fachübliche Pflasterplatten bekannte Materialien umfassen. Insbesondere kann der Plattenkorpus einen Kunststein und/oder einen Kunststoff, vorzugsweise ein Recycling-Verbundmaterial, umfassen.

Die Verwendung eines wiederverwerteten Rohstoffs in Form eines Recycling-Verbundmaterials verbessert die Umweltverträglichkeit im Verhältnis zu üblichen Materialien aus Primärrohstoffen erheblich. Zu Recycling-Verbundmaterialien zählen auch Kunststoffe, die aus wiederverwertbarem Hausmüll, insbesondere Verpackungsmüll gewonnen werden. Recycling-Verbundmaterialien aus Verpackungsmüll wurden beispielsweise bereits für Hochwasser-Schutzwände (DE 20 2004 008 412 U1, DE 20 2004 012 013 U1), Fahrbahnelemente (DE 9 406 259 U1) oder Lärmschutzwände (DE 10 2007 053 614 A1) eingesetzt.

Die Pflasterplatte umfasst zumindest ein flächiges, entlang der Modulebene des zumindest einen Moduls ausgerichtetes, zumindest abschnittsweise transluzentes, insbesondere transparentes, Deckelement zum Schutz des zumindest einen Moduls, wobei das zumindest eine Modul von dem Plattenkorpus und dem zumindest einen Deckelement zumindest flüssigkeitsdicht umschlossen ist.

Das Deckelement schützt das Modul vorteilhafterweise vor mechanischen Belastungen und vor Fremdstoffen, insbesondere vor Regenwasser und darin suspendierten oder gelösten Stoffen wie beispielsweise Salz. Das Deckelement erhöht somit die Lebensdauer des Moduls.

Das Deckelement besteht aus einem Kunststoff, der auf das Modul in die Aussparung gegossen ist. Durch ein Vergießen mit Kunststoff kann das Modul besonders zuverlässig und dauerhaft flüssigkeitsdicht eingeschlossen werden. Das Deckelement kann beispielsweise eine auf dem Modul in der Aussparung angeordnete Glasplatte umfassen, die mit einem Dichtmittel, insbesondere mit einem Dichtring, flüssigkeitsdicht mit dem Plattenkorpus verbunden ist. Die Glasplatte ist beständiger gegen lichtbedingte Alterung und mechanischen Abrieb als ein Deckelement aus Kunststoff und stellt dadurch dauerhaft eine hohe Lichtdurchlässigkeit sicher, die einen effizienten Betrieb der Photovoltaikschicht und der Leuchtschicht des Moduls ermöglicht.

Die Pflasterplatte umfasst vorzugsweise zumindest einen Sensor zur automatischen Steuerung der zumindest einen Heizschicht und/oder der zumindest einen Leuchtschicht des Moduls, wobei der zumindest eine Sensor einen Temperatursensor, einen Helligkeitssensor und/oder einen Präsenzsensor, bevorzugt einen Radarsensor und/oder Infrarotsensor, umfasst.

Mit Hilfe eines Temperatursensors kann die Heizschicht vorteilhafterweise automatisch so gesteuert werden, dass eine Vereisung der Pflasterplatte mit minimalem Energieverbrauch verhindert wird.

Mit Hilfe eines Helligkeitssensors kann die Leuchtschicht vorteilhafterweise automatisch genau dann aktiviert werden, wenn eine geringe Umgebungshelligkeit dies erfordert, sodass der Energieverbrauch minimiert wird.

Mit Hilfe eines Präsenzsensors kann die Leuchtschicht vorteilhafterweise automatisch genau dann aktiviert werden, wenn die Pflasterplatte begangen oder befahren wird, sodass der Energieverbrauch minimiert wird. Ein Radarsensor und ein Infrarotsensor haben gegenüber anderen Präsenzsensoren, beispielsweise Drucksensoren, den Vorteil, dass sie keine beweglichen Teile enthalten und daher besonders langlebig sind. Insbesondere wird ein flüssigkeitsdichter Einschluss des Moduls nicht durch eine Bewegung beweglicher Teile gefährdet.

Ein Pflastersystem zum Pflastern einer Verkehrsfläche kann eine Vielzahl von mit einem erfindungsgemäßen Verfahren hergestellten Pflasterplatten und zumindest ein Buskabel zur zentralen Energieversorgung und/oder Steuerung zumindest der Heizschichten und/oder Leuchtschichten der Pflasterplatten umfassen, wobei jede der Pflasterplatten zumindest einen Busstecker zur Verbindung der Heizschichten und/oder Leuchtschichten der Pflasterplatten mit dem zumindest einen Buskabel umfasst.

Die Pflasterplatten und das Buskabel sind vorzugsweise zur Energieversorgung und/oder Steuerung mit einem Niedervolt-System, insbesondere mit einer Spannung von maximal 60 V, ausgelegt. Ein Niedervolt-System hat den Vorteil, dass es auch von Personen ohne spezielle Kenntnisse im Bereich der Elektroinstallation, beispielsweise von Pflasterern, gefahrlos installiert werden kann.

Die Steuerung kann vorteilhafterweise von einem zentralen Steuergerät, insbesondere mit einer Anzahl von zentralen Sensoren und/oder automatisch, erfolgen. Daraus ergibt sich der Vorteil, dass nicht jede einzelne Pflasterplatte mit Sensoren und/oder einem Steuergerät ausgestattet sein muss, wodurch sich die Installationskosten reduzieren.

Die zentralen Sensoren können beispielsweise so ausgestaltet sein wie zuvor zu den Sensoren der erfindungsgemäßen Pflasterplatte beschrieben.

Der Busstecker ist vorzugsweise verpolungssicher ausgestaltet, um die Installation zu vereinfachen. Der Busstecker ist vorzugsweise verriegelbar, um ein unbeabsichtigtes Lösen von der Pflasterplatte, beispielsweise durch Erschütterungen, wenn die Pflasterplatte befahren wird, zu verhindern. Zum Schutz vor Korrosion und Kurzschlüssen ist der Busstecker vorzugsweise wasserdicht ausgestaltet.

Die Erfindung betrifft ein Verfahren zur Herstellung einer zuvor beschriebenen Pflasterplatte. Das Verfahren umfasst zumindest folgende Schritte, insbesondere in der genannten Reihenfolge:
a. Bereitstellen eines flächigen Trägerelements für das Modul der Pflasterplatte,
b. Siebdrucken der zumindest einen Photovoltaikschicht und der zumindest einen Leuchtschicht des Moduls auf das Trägerelement,
c. Anordnen des Moduls in der Aussparung des Plattenkorpus der Pflasterplatte und
d. flüssigkeitsdichtes Einschließen des Moduls in der Aussparung mit dem Deckelement der Pflasterplatte.

Das Trägerelement kann insbesondere wie zuvor beschrieben ausgestaltet sein.

Die Schichten können insbesondere wie zuvor beschrieben ausgestaltet sein. Vorzugsweise werden alle Schichten des Moduls durch Siebdrucken hergestellt. Insbesondere können auch zum Betrieb des Moduls notwendige elektrische Verbindungen zwischen den Schichten und/oder innerhalb der Schichten des Moduls durch Siebdrucken hergestellt werden. Besonders bevorzugt wird das gesamte Modul oder das gesamte Modul bis auf das Trägerelement durch Siebdrucken hergestellt.

Die Materialien zur Erzeugung der Schichten können als Pasten bereitgestellt werden, welche mit einem Siebdruckverfahren aufgebracht werden. Ein besonderer Vorteil des Siebdruckverfahrens ist, dass die Schichten sehr schnell und kostengünstig aufgetragen werden können. Geschwindigkeiten von bis zu 400 m² pro Stunde sind mit einer entsprechenden Druckmaschine möglich.

Das Einschließen des Moduls umfasst ein Gießen des Deckelements aus einem Kunststoff auf das Modul in die Aussparung. Durch das Gießen des Deckelements wird besonders einfach und schnell eine zuverlässige und langlebige Abdichtung des Moduls gegenüber Umwelteinflüssen erreicht.

Das Gießen des Deckelements erfolgt unter Hochfrequenzanregung des Kunststoffs. Durch eine Anregung des Kunststoffs mit hochfrequenten Schwingungen, beispielsweise mit einer Frequenz von 1 MHz bis 1 THz, insbesondere von 10 MHz bis 1 GHz, werden mögliche Gaseinschlüsse, die zu Undichtigkeiten oder einer verringerten mechanischen Belastbarkeit des Deckelements führen könnten, aus dem flüssigen Kunststoff ausgetrieben.

Das Verfahren umfasst vorzugsweise ein Härten zumindest einer Schicht des Moduls durch ein Bestrahlen der Schicht mit infrarotem Licht, bevorzugt während einer Bestrahlungsdauer von 0,1 s bis 100 s, besonders bevorzugt von 1 s bis 10 s. Das Härten ermöglicht es, weitere Schichten ohne zusätzliche Wartezeit direkt auf die gehärtete Schicht aufzubringen, ohne dass die gehärtete Schicht dadurch beschädigt wird. Das Modul kann somit besonders schnell und kostengünstig hergestellt werden.

Das Bestrahlen mit infrarotem Licht hat den Vorteil, dass die Schichten dadurch kontaktlos und besonders schnell erhitzt und dadurch gehärtet werden können.

### Kurze Beschreibung der Zeichnungen

Weitere Vorteile, Ziele und Eigenschaften der Erfindung werden anhand nachfolgender Beschreibung und anliegender Zeichnungen erläutert, in welchen beispielhaft erfindungsgemäße Gegenstände dargestellt sind. Merkmale, welche in den Figuren wenigstens im Wesentlichen hinsichtlich ihrer Funktion übereinstimmen, können hierbei mit gleichen Bezugszeichen gekennzeichnet sein, wobei diese Merkmale nicht in allen Figuren beziffert und erläutert sein müssen.
Figur 1 zeigt eine schematische Schnittdarstellung senkrecht zur Modulebene einer erfindungsgemäß hergestellten Pflasterplatte.
Figur 2 zeigt eine schematische Schnittdarstellung senkrecht zur Modulebene eines Moduls einer erfindungsgemäß hergestellten Pflasterplatte.
Figur 3 zeigt eine schematische Schnittdarstellung senkrecht zur Modulebene eines weiteren Moduls einer erfindungsgemäß hergestellten Pflasterplatte.
Figur 4 zeigt eine schematische Schnittdarstellung senkrecht zur Modulebene eines weiteren Moduls einer erfindungsgemäß hergestellten Pflasterplatte.
Figur 5 zeigt eine schematische Schnittdarstellung senkrecht zur Modulebene einer Leuchtschicht eines Moduls einer erfindungsgemäß hergestellten Pflasterplatte.
Figur 6 zeigt eine schematische Schnittdarstellung senkrecht zur Modulebene einer Induktionsschicht eines Moduls einer erfindungsgemäß hergestellten Pflasterplatte.
Figur 7 zeigt eine schematische Schnittdarstellung senkrecht zur Modulebene einer Heizschicht eines Moduls einer erfindungsgemäß hergestellten Pflasterplatte.
Figur 8 zeigt eine schematische Schnittdarstellung senkrecht zur Modulebene einer Energiespeicherschicht eines Moduls einer erfindungsgemäß hergestellten Pflasterplatte.
Figur 9 zeigt eine schematische Schnittdarstellung senkrecht zur Modulebene einer Photovoltaikschicht eines Moduls einer erfindungsgemäß hergestellten Pflasterplatte.

### Fig.1

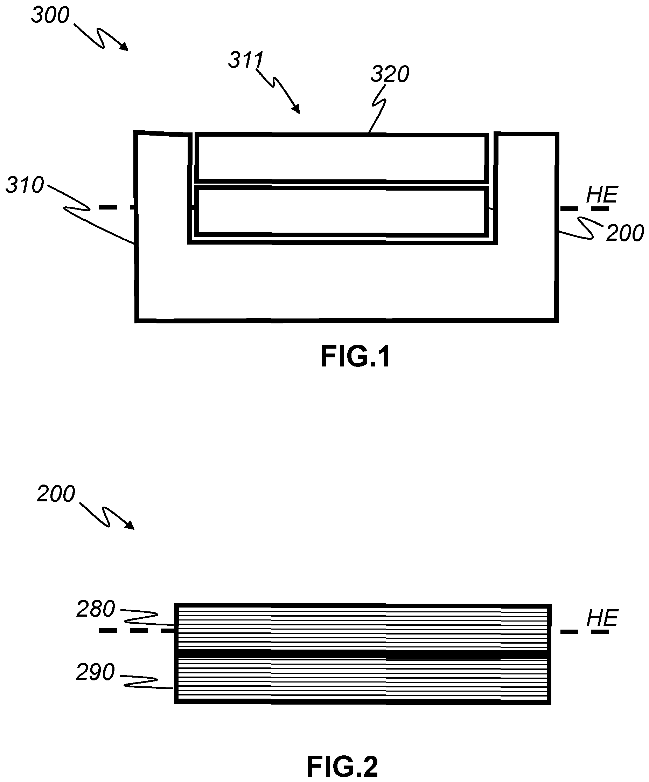

Figur 1 zeigt eine schematische Schnittdarstellung senkrecht zur Modulebene HE einer erfindungsgemäß hergestellten Pflasterplatte 300. Die Pflasterplatte 300 umfasst einen Plattenkorpus 310 mit einer Aussparung 311, wobei in der Aussparung 311 ein erfindungsgemäßes Modul 200 angeordnet ist.

Die Pflasterplatte 300 umfasst ein flächiges, entlang der Modulebene HE des Moduls 200 ausgerichtetes, zumindest abschnittsweise transluzentes Deckelement 320 zum Schutz des Moduls 200, wobei das Modul 200 von dem Plattenkorpus 310 und dem zumindest einen Deckelement 320 flüssigkeitsdicht umschlossen ist.

Das Deckelement 320 umfasst beispielsweise einen transparenten Kunststoff, der mit dem Plattenkorpus 310 vergossen ist.

### Fig.2

Figur 2 zeigt eine schematische Schnittdarstellung senkrecht zur Modulebene HE eines Moduls 200 einer erfindungsgemäß hergestellten Pflasterplatte 300. Das Modul 200 erstreckt sich flächig entlang der Modulebene HE und umfasst eine entlang der Modulebene HE ausgerichtete, flächige Heizschicht 290 zur Beheizung einer Umgebung des Moduls 200 und eine flächige, entlang der Modulebene HE ausgerichtete Photovoltaikschicht 280 zur Gewinnung elektrischer Energie.

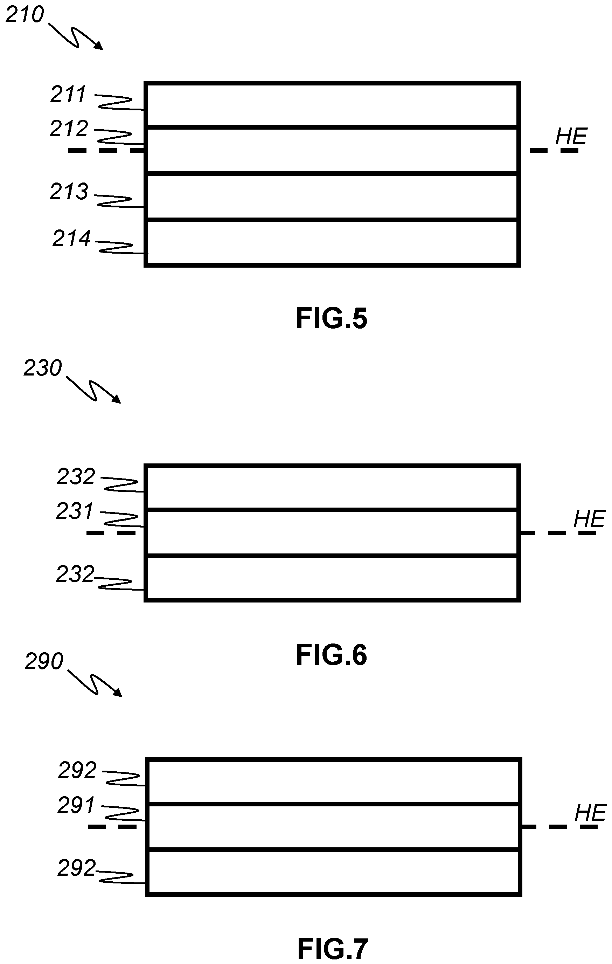

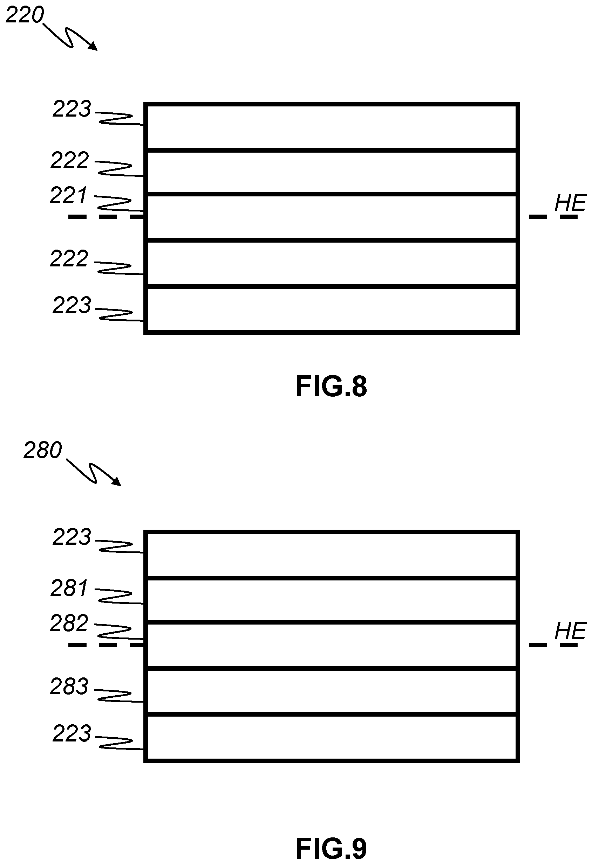

Die Heizschicht 290 und die Photovoltaikschicht 280 umfassen jeweils eine Mehrzahl von entlang der Modulebene HE ausgerichteten Materiallagen (durch Schraffur dargestellt) mit voneinander unterschiedlichen Materialzusammensetzungen. Jeweils ein möglicher Aufbau der Heizschicht 290 und der Photovoltaikschicht 280 ist in den Figuren 7 und 9 gezeigt.

Zum Betrieb des Moduls 200 notwendige elektrische Verbindungen zwischen den Schichten und/oder innerhalb der Schichten des Moduls 200 sind hier und in den folgenden Figuren der Übersichtlichkeit halber nicht dargestellt.

### Fig.3

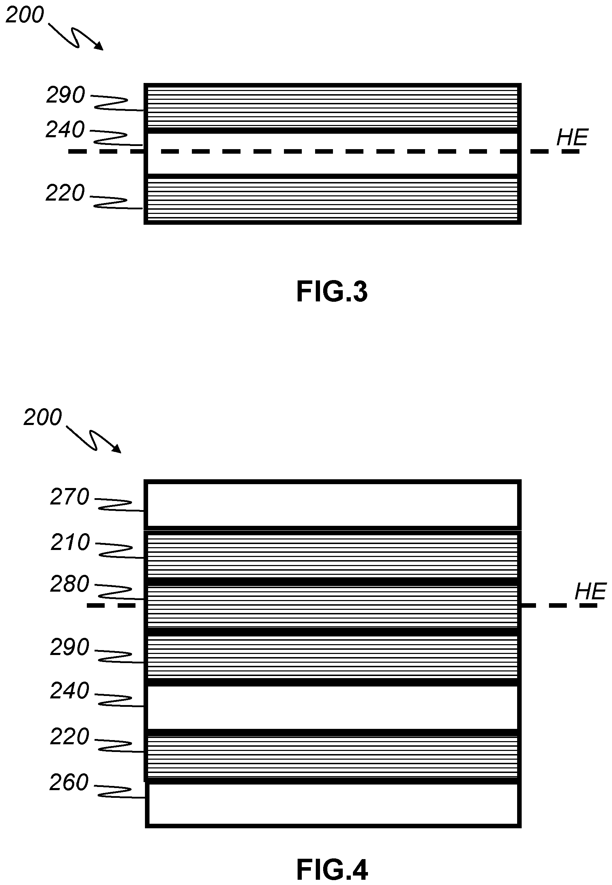

Figur 3 zeigt eine schematische Schnittdarstellung senkrecht zur Modulebene HE eines Moduls 200 einer erfindungsgemäß hergestellten Pflasterplatte 300. Das Modul 200 erstreckt sich flächig entlang der Modulebene HE und umfasst eine entlang der Modulebene HE ausgerichtete, flächige Heizschicht 290 zur Beheizung einer Umgebung des Moduls 200 und eine entlang der Modulebene HE ausgerichtete, flächige Energiespeicherschicht 220 zur Speicherung elektrischer Energie, wobei zwischen der Heizschicht 290 und der Energiespeicherschicht 220 eine entlang der Modulebene HE ausgerichtete, flächige thermische Isolierschicht 240 angeordnet ist.

Die Isolierschicht 240 umfasst beispielsweise ein Calcium-Silikat, Chitosan und einen hitzebeständigen Binder und hat beispielsweise eine Schichtdicke senkrecht zur Modulebene HE von 40 µm bis 100 µm.

Die Heizschicht 290 und die Energiespeicherschicht 220 umfassen jeweils eine Mehrzahl von entlang der Modulebene HE ausgerichteten Materiallagen (durch Schraffur dargestellt) mit voneinander unterschiedlichen Materialzusammensetzungen. Jeweils ein möglicher Aufbau der Heizschicht 290 und der Energiespeicherschicht 220 ist in den Figuren 7 und 8 gezeigt.

### Fig.4

Figur 4 zeigt eine schematische Schnittdarstellung senkrecht zur Modulebene HE eines weiteren Moduls 200 einer erfindungsgemäß hergestellten Pflasterplatte 300.

Zusätzlich zu den in Figur 2 gezeigten Schichten umfasst das Modul 200 folgende weitere Schichten:
Das Modul 200 umfasst eine entlang der Modulebene HE ausgerichtete, flächige, Leuchtschicht 210 zur Beleuchtung einer Umgebung des Moduls 200, wobei die Leuchtschicht 210 eine Mehrzahl von entlang der Modulebene HE ausgerichteten Materiallagen (durch Schraffur dargestellt) mit voneinander unterschiedlichen Materialzusammensetzungen umfasst.

Die Leuchtschicht 210 ist beispielsweise an der der Heizschicht 290 abgewandten Seite der Photovoltaikschicht 280 angeordnet. Ein möglicher Aufbau der Leuchtschicht 210 ist in Figur 5 gezeigt.

Das Modul 200 umfasst eine entlang der Modulebene HE ausgerichtete, flächige Energiespeicherschicht 220 zur Speicherung elektrischer Energie, wobei zwischen der Heizschicht 290 und der Energiespeicherschicht 220 eine entlang der Modulebene HE ausgerichtete, flächige thermische Isolierschicht 240 angeordnet ist.

Die Energiespeicherschicht 220 ist beispielsweise an der der Photovoltaikschicht 280 abgewandten Seite der Heizschicht 290 angeordnet.

Die Isolierschicht 240 ist beispielsweise wie zu Figur 3 beschrieben ausgestaltet.

Die Heizschicht 290 und die Energiespeicherschicht 220 umfassen jeweils eine Mehrzahl von entlang der Modulebene HE ausgerichteten Materiallagen (durch Schraffur dargestellt) mit voneinander unterschiedlichen Materialzusammensetzungen. Jeweils ein möglicher Aufbau der Heizschicht 290 und der Energiespeicherschicht 220 ist in den Figuren 7 und 8 gezeigt.

Das Modul 200 umfasst ein sich flächig entlang der Modulebene HE erstreckendes Trägerelement 260, beispielsweise einen PET-Folie, auf das zumindest die Schichten des Moduls 200, beispielsweise durch Siebdruck, aufgebracht sind.

Das Modul 200 umfasst eine Verkapselungsschicht 270 zum Schutz der übrigen Schichten des Moduls 200 vor Umwelteinflüssen, wobei beispielsweise die Verkapselungsschicht 270 zumindest abschnittsweise transluzent ist. Die Verkapselungsschicht 270 besteht beispielsweise aus einem transparenten Kunststoff, insbesondere aus PET.

Die Reihenfolge der Schichten des Moduls 200 ist beispielsweise senkrecht zu Modulebene HE: Trägerelement 260, Energiespeicherschicht 220, Isolierschicht 240, Heizschicht 290, Photovoltaikschicht 280, Leuchtschicht 210, Verkapselungsschicht 270.

### Fig.5

Figur 5 zeigt eine schematische Schnittdarstellung senkrecht zur Modulebene HE einer beispielsweise als OLED ausgestalteten Leuchtschicht 210 eines Moduls 200 einer erfindungsgemäß hergestellten Pflasterplatte 300, umfassend mehrere entlang der Modulebene HE ausgerichtete Materiallagen mit voneinander unterschiedlichen Materialzusammensetzungen.

Die dargestellte Leuchtschicht 210 umfasst beispielsweise eine Anodenlage 211, bestehend beispielsweise aus Indium-Zinnoxid, und eine sich daran anschließenden Lochleitungslage 212. An die Lochleitungslage 212 schließt sich eine Farbstofflage 213 an, die einen organischen Farbstoff enthält. Den Abschluss der dargestellten Leuchtschicht 210 bildet eine Kathodenlage 214, bestehend aus einem Metall, wie zum Beispiel Calcium oder Barium. Der Farbstoff kann beispielsweise ein Derivat von Poly(p-phenylen-vinyl) umfassen.

### Fig.6

Figur 6 zeigt eine schematische Schnittdarstellung senkrecht zur Modulebene HE einer Induktionsschicht 230 eines Moduls 200 einer erfindungsgemäß hergestellten Pflasterplatte 300, umfassend mehrere entlang der Modulebene HE ausgerichtete Materiallagen mit voneinander unterschiedlichen Materialzusammensetzungen.

Die dargestellte Induktionsschicht 230 umfasst beispielsweise eine Induktionsspule 231, beispielsweise aus einem Metall, und eine elektrisch isolierende Ummantelung 232, beispielsweise aus einem Kunststoff, zumindest senkrecht zur Modulebene HE über und unter der Induktionsspule 231.

### Fig.7

Figur 7 zeigt eine schematische Schnittdarstellung senkrecht zur Modulebene HE einer Heizschicht 290 eines Moduls 200 einer erfindungsgemäß hergestellten Pflasterplatte 300, umfassend mehrere entlang der Modulebene HE ausgerichtete Materiallagen mit voneinander unterschiedlichen Materialzusammensetzungen.

Die dargestellte Heizschicht 290 umfasst beispielsweise eine Anzahl von Leiterbahnen 291, beispielsweise aus einem Metall, und jeweils eine elektrisch isolierende Isolierlage 292, beispielsweise aus einem Kunststoff, senkrecht zur Modulebene HE über und unter den Leiterbahnen 291.

### Fig.8

Figur 8 zeigt eine schematische Schnittdarstellung senkrecht zur Modulebene HE einer Energiespeicherschicht 220 eines Moduls 200 einer erfindungsgemäß hergestellten Pflasterplatte 300, umfassend mehrere entlang der Modulebene HE ausgerichtete Materiallagen mit voneinander unterschiedlichen Materialzusammensetzungen.

Die beispielsweise als Festkörperakkumulator ausgebildete Energiespeicherschicht 220 umfasst zum Beispiel zwei Elektrodenlagen 222, dazwischen eine Separatorlage 221 mit einem Elektrolyten und an den Außenseiten je eine als elektrischer Isolator ausgebildete Verkapselungslage 223, beispielsweise aus einem Kunststoff.

Die Elektrodenlage 222 umfassen beispielsweise Kohlenstoff und/oder ein elektrisch leitfähiges Polymer. Die Verkapselungslagen 223 umfassen beispielsweise einen elektrisch isolierenden Kunststoff. Die Separatorlage 221 umfasst beispielsweise einen für Ionen leitenden porösen Kunststoff als polymeren Elektrolyt.

### Fig.9

Figur 9 zeigt eine schematische Schnittdarstellung senkrecht zur Modulebene HE einer Photovoltaikschicht 280 eines Moduls 200 einer erfindungsgemäß hergestellten Pflasterplatte 300, umfassend mehrere entlang der Modulebene HE ausgerichtete Materiallagen mit voneinander unterschiedlichen Materialzusammensetzungen.

Die Photovoltaikschicht 280 ist beispielsweise als Dünnschichtsolarzelle ausgestaltet, umfassend beispielsweise mikrokristallines Silicium (µc-Si:H) als photoaktives Material.

Die Photovoltaikschicht 280 umfasst beispielsweise senkrecht zur Modulebene HE übereinander eine transluzente Frontelektrodenlage 281 und danach eine Photoaktivlage 282 mit dem photoaktiven Material und danach eine Backelektrodenlage 283.

Den Abschluss der Photovoltaikschicht 280 senkrecht zur Modulebene HE bildet beispielsweise jeweils eine elektrisch isolierende Verkapselungslage 223, beispielsweise aus einem Kunststoff.

### Liste der Bezugszeichen

| | | | |
|---|---|---|---|
| 200 | Modul | 260 | Trägerelement |
| 210 | Leuchtschicht | 270 | Verkapselungsschicht |
| 211 | Anodenlage | 280 | Photovoltaikschicht |
| 212 | Lochleitungslage | 281 | Frontelektrodenlage |
| 213 | Farbstofflage | 282 | Photoaktivlage |
| 214 | Kathodenlage | 283 | Backelektrodenlage |
| 220 | Energiespeicherschicht | 290 | Heizschicht |
| 221 | Separatorlage | 291 | Leiterbahn |
| 222 | Elektrodenlage | 292 | Isolierlage |
| 223 | Verkapselungslage | 300 | Pflasterplatte |
| 230 | Induktionsschicht | 310 | Plattenkorpus |
| 231 | Induktionsspule | 311 | Aussparung |
| 232 | Ummantelung | 320 | Deckelement |
| 240 | Isolierschicht | HE | Modulebene |

## Patentansprüche

1. Verfahren zur Herstellung einer Pflasterplatte (300) zum Pflastern einer Verkehrsfläche, die Pflasterplatte (300) umfassend
a. einen Plattenkorpus (310) mit zumindest einer Aussparung (311),
b. ein in der zumindest einen Aussparung (311) angeordnetes Modul (200), wobei sich das Modul (200) flächig entlang einer Modulebene (HE) erstreckt, und
c. zumindest ein flächiges, entlang der Modulebene (HE) ausgerichtetes und zumindest abschnittsweise transluzentes Deckelement (320) zum Schutz des zumindest einen Moduls (200),
d. wobei das zumindest eine Modul (200) von dem Plattenkorpus (310) und dem zumindest einen Deckelement (320) zumindest flüssigkeitsdicht umschlossen ist,
e. das Modul (200) umfassend
i. zumindest eine flächige, entlang der Modulebene (HE) ausgerichtete Photovoltaikschicht (280) zur Gewinnung elektrischer Energie,
ii. zumindest eine entlang der Modulebene (HE) ausgerichtete, flächige, Leuchtschicht (210) zur Beleuchtung einer Umgebung des Moduls (200), und
iii. zumindest ein sich flächig entlang der Modulebene (HE) erstreckendes Trägerelement (260), auf das die zumindest eine Photovoltaikschicht (280) und die zumindest eine Leuchtschicht (210) durch Siebdruck aufgebracht sind,
f. wobei die zumindest eine Photovoltaikschicht (280) und die zumindest eine Leuchtschicht (210) jeweils eine Mehrzahl von entlang der Modulebene (HE) ausgerichteten Materiallagen mit voneinander unterschiedlichen Materialzusammensetzungen umfassen,
g. wobei die zumindest eine Photovoltaikschicht (280), die zumindest eine Leuchtschicht (210), das zumindest eine Trägerelement (260) und das gesamte Modul (200) flexibel ausgestaltet sind,
das Verfahren umfassend folgende Schritte:
h. Bereitstellen eines flächigen und flexiblen Trägerelements (260) für das Modul (200) der Pflasterplatte (300),
i. Siebdrucken der zumindest einen Photovoltaikschicht (280) und der zumindest einen Leuchtschicht (210) des Moduls (200) auf das Trägerelement (260),
j. Anordnen des Moduls (200) in der Aussparung (311) des Plattenkorpus (310) der Pflasterplatte (300) und
k. flüssigkeitsdichtes Einschließen des Moduls (200) in der Aussparung (311) mit dem Deckelement (320) der Pflasterplatte (300),
I. wobei das Einschließen des Moduls (200) ein Gießen des Deckelements (320) aus einem Kunststoff auf das Modul (200) unter Hochfrequenzanregung des Kunststoffs in die Aussparung (311) umfasst.

2. Verfahren nach Anspruch 1,
**dadurch gekennzeichnet, dass**
a. das Modul (200) zumindest eine entlang der Modulebene (HE) ausgerichtete, flächige und flexible Heizschicht (290) zur Beheizung einer Umgebung des Moduls (200) umfasst,
b. wobei die zumindest eine Heizschicht (290) durch Siebdruck auf das Trägerelement (260) aufgebracht wird, und
c. wobei die zumindest eine Heizschicht (290) eine Mehrzahl von entlang der Modulebene (HE) ausgerichteten Materiallagen mit voneinander unterschiedlichen Materialzusammensetzungen umfasst.

3. Verfahren nach Anspruch 1 oder 2,
**dadurch gekennzeichnet, dass**
a. das Modul (200) zumindest eine entlang der Modulebene (HE) ausgerichtete, flächige und flexible Energiespeicherschicht (220) zur Speicherung elektrischer Energie umfasst,
b. wobei die zumindest eine Energiespeicherschicht (220) durch Siebdruck auf das Trägerelement (260) aufgebracht wird, und
c. wobei die zumindest eine Energiespeicherschicht (220) eine Mehrzahl von entlang der Modulebene (HE) ausgerichteten Materiallagen mit voneinander unterschiedlichen Materialzusammensetzungen umfasst.

4. Verfahren nach Anspruch 2 und 3,
**dadurch gekennzeichnet, dass**
a. zwischen der Heizschicht (290) und der Energiespeicherschicht (220) eine entlang der Modulebene (HE) ausgerichtete, flächige und flexible thermische Isolierschicht (240) angeordnet wird,
b. wobei die Isolierschicht (240) durch Siebdruck auf das Trägerelement (260) aufgebracht wird.

5. Verfahren nach Anspruch 4,
**dadurch gekennzeichnet, dass**
die Isolierschicht (240) des Moduls (200) ein Calcium-Silikat, Chitosan und einen hitzebeständigen Binder umfasst.

6. Verfahren nach einem der Ansprüche 1 bis 5,
**dadurch gekennzeichnet, dass**
die zumindest eine Photovoltaikschicht (280) und die zumindest eine Leuchtschicht (210) des Moduls (200) entlang der Modulebene (HE) des Moduls (200) nebeneinander oder ineinander angeordnet werden.

7. Verfahren nach einem der Ansprüche 1 bis 6,
**dadurch gekennzeichnet, dass**
a. das Modul (200) zumindest eine flexible Verkapselungsschicht (270) zum Schutz der zumindest einen Leuchtschicht (210) und der zumindest einen Photovoltaikschicht (280) vor Umwelteinflüssen umfasst,
b. wobei das Trägerelement (260) und/oder die Verkapselungsschicht (270) zumindest abschnittsweise transluzent ist.

8. Verfahren nach einem der Ansprüche 1 bis 7,
**dadurch gekennzeichnet, dass**
a. die Pflasterplatte (300) zumindest einen Sensor (340) zur automatischen Steuerung der zumindest einen Leuchtschicht (210) des Moduls (200) umfasst,
b. wobei der zumindest einen Sensor (340) einen Präsenzsensor, ausgewählt aus einem Radarsensor und einem Infrarotsensor, umfasst.

9. Verfahren nach einem der Ansprüche 1 bis 8,
**gekennzeichnet durch den Schritt:**
Härten zumindest einer Schicht (210, 220, 230, 240, 270, 280, 290) des Moduls (200) durch ein Bestrahlen der Schicht mit infrarotem Licht.

## Claims

1. A method for manufacturing a paving slab (300) for paving a circulation area, the paving slab (300) comprising
a. a slab body (310) having at least one cutout (311),
b. a module (200) arranged in the at least one cutout (311), wherein the module (200) extends in a planar manner along a module plane (HE), and
c. at least one planar cover element (320) which is oriented along the module plane (HE) and which is translucent at least in portions for protecting the at least one module (200),
d. wherein the at least one module (200) is surrounded by the slab body (310) and the at least one cover element (320) at least in a liquid-tight manner,
e. the module (200) comprising
i. at least one planar photovoltaic layer (280) oriented along the module plane (HE) for generating electrical energy,
ii. at least one planar luminescent layer (210) oriented along the module plane (HE) for illuminating surroundings of the module (200), and
iii. at least one support element (260) which extends in a planar manner along the module plane (HE) and onto which the at least one photovoltaic layer (280) and the at least one luminescent layer (210) are applied by means of screen printing,
f. wherein the at least one photovoltaic layer (280) and the at least one luminescent layer (210) each comprise a plurality of material layers oriented along the module plane (HE) and having material compositions that are different from one another,
g. wherein the at least one photovoltaic layer (280), the at least one luminescent layer (210), the at least one support element (260), and the entire module (200) are designed to be flexible,
the method comprising the following steps:
h. providing a planar and flexible support element (260) for the module (200) of the paving slab (300),
i. screen printing the at least one photovoltaic layer (280) and the at least one luminescent layer (210) of the module (200) onto the support element (260),
j. arranging the module (200) in the cutout (311) of the slab body (310) of the paving slab (300), and
k. enclosing the module (200) in the cutout (311) in a liquid-tight manner by means of the cover element (320) of the paving slab (300),
1. wherein the enclosing of the module (200) includes casting the cover element (320) from a plastics material onto the module (200) with high-frequency excitation of the plastics material into the cutout (311).

2. The method according to claim 1,
**characterized in that**
a. the module (200) comprises at least one planar and flexible heating layer (290) oriented along the module plane (HE) for heating surroundings of the module (200),
b. wherein the at least one heating layer (290) is applied onto the support element (260) by means of screen printing, and
c. wherein the at least one heating layer (290) comprises a plurality of material layers oriented along the module plane (HE) and having material compositions that are different from one another.

3. The method according to claim 1 or 2,
**characterized in that**
a. the module (200) comprises at least one planar and flexible energy storage layer (220) oriented along the module plane (HE) for storing electrical energy,
b. wherein the at least one energy storage layer (220) is applied onto the support element (260) by means of screen printing, and
c. wherein the at least one energy storage layer (220) comprises a plurality of material layers oriented along the module plane (HE) and having material compositions that are different from one another.

4. The method according to claim 2 and 3,
**characterized in that**
a. a planar and flexible thermal insulation layer (240) oriented along the module plane (HE) is arranged between the heating layer (290) and the energy storage layer (220),
b. wherein the insulation layer (240) is applied onto the support element (260) by means of screen printing.

5. The method according to claim 4,
**characterized in that**
the insulation layer (240) of the module (200) comprises a calcium silicate, chitosan, and a heat-resistant binder.

6. The method according to any one of claims 1 to 5,
**characterized in that**
the at least one photovoltaic layer (280) and the at least one luminescent layer (210) of the module (200) are arranged one next to the other or one inside the other along the module plane (HE) of the module (200).

7. The method according to any one of claims 1 to 6,
**characterized in that**
a. the module (200) comprises at least one flexible encapsulation layer (270) for protecting the at least one luminescent layer (210) and the at least one photovoltaic layer (280) from environmental influences,
b. wherein the support element (260) and/or the encapsulation layer (270) is translucent at least in portions.

8. The method according to any one of claims 1 to 7,
**characterized in that**
a. the paving slab (300) comprises at least one sensor (340) for automatically controlling the at least one luminescent layer (210) of the module (200),
b. wherein the at least one sensor (340) comprises a presence sensor, selected from a radar sensor and an infrared sensor.

9. The method according to any one of claims 1 to 8,
**characterized by** the step of:
hardening at least one layer (210, 220, 230, 240, 270, 280, 290) of the module (200) by irradiating the layer with infrared light.

## Revendications

1. Un procédé de fabrication d'une dalle de pavage (300) pour le pavage d'une zone de circulation, la dalle de pavage (300) comprenant :
a. un corps de dalle (310) présentant au moins un évidement (311),
b. un module (200) agencé dans le au moins un évidement (311), le module (200) s'étendant à plat le long d'un plan de module (HE), et
c. au moins un élément de couverture (320) plat, orienté le long du plan de module (HE) et translucide au moins par sections, pour protéger le au moins un module (200),
d. le au moins un module (200) étant entouré par le corps de dalle (310) et le au moins un élément de couverture (320) de manière au moins étanche aux liquides,
e. le module (200) comprenant :
i. au moins une couche photovoltaïque (280) plate, orientée le long du plan du module (HE), pour la production d'énergie électrique,
ii. au moins une couche luminescente (210) plate, orientée le long du plan du module (HE), pour éclairer un environnement du module (200), et
iii. au moins un élément de support (260) s'étendant de manière plate le long du plan du module (HE), sur lequel la au moins une couche photovoltaïque (280) et la au moins une couche luminescente (210) sont appliquées par sérigraphie,
f. sachant que l'au moins une couche photovoltaïque (280) et l'au moins une couche luminescente (210) comprennent chacune une pluralité de couches de matériaux orientées le long du plan du module (HE) et ayant des compositions de matériau différentes les unes des autres,
g. sachant que l'au moins une couche photovoltaïque (280), l'au moins une couche luminescente (210), l'au moins un élément de support (260) et l'ensemble du module (200) sont conçus de manière flexible,
le procédé comprenant les étapes suivantes :
h. fournir un élément de support (260) plat et flexible pour le module (200) de la dalle de pavage (300),
i. sérigraphier la au moins une couche photovoltaïque (280) et la au moins une couche luminescente (210) du module (200) sur l'élément de support (260),
j. agencer le module (200) dans l'évidement (311) du corps de dalle (310) de la dalle de pavage (300) et
k. enfermer de manière étanche aux liquides le module (200) dans l'évidement (311) avec l'élément de couverture (320) de la dalle de pavage (300),
l. sachant que l'enfermement du module (200) comprend un coulage de l'élément de couverture (320) en matière plastique sur le module (200) avec excitation à haute fréquence de la matière plastique dans l'évidement (311).

2. Le procédé d'après la revendication 1,
**caractérisé en ce que**
a. le module (200) comprend au moins une couche de chauffage (290) plate et flexible, orientée le long du plan du module (HE), pour le chauffage d'un environnement du module (200),
b. sachant que ladite au moins une couche de chauffage (290) est appliquée par sérigraphie sur l'élément de support (260), et
c. sachant que ladite au moins une couche de chauffage (290) comprend une pluralité de couches de matériaux orientées le long du plan du module (HE) et présentant des compositions de matériaux différentes les unes des autres.

3. Le procédé d'après la revendication 1 ou 2,
**caractérisé en ce que**
a. le module (200) comprend au moins une couche de stockage d'énergie (220) plate et flexible, orientée le long du plan du module (HE), pour le stockage de l'énergie électrique,
b. sachant que la au moins une couche de stockage d'énergie (220) est appliquée par sérigraphie sur l'élément de support (260), et
c. sachant que la au moins une couche de stockage d'énergie (220) comprend une pluralité de couches de matériaux orientées le long du plan du module (HE) et ayant des compositions de matériaux différentes les unes des autres.

4. Le procédé d'après les revendications 2 et 3,
**caractérisé en ce que**
a. une couche d'isolation thermique (240) plate et flexible, orientée le long du plan du module (HE), est agencée entre la couche de chauffage (290) et la couche de stockage d'énergie (220),
b. sachant que la couche d'isolation (240) est appliquée par sérigraphie sur l'élément de support (260).

5. Le procédé d'après la revendication 4,
**caractérisé en ce que**
la couche d'isolation (240) du module (200) comprend un silicate de calcium, du chitosane et un liant résistant à la chaleur.

6. Le procédé d'après l'une quelconque des revendications de 1 à 5,
**caractérisé en ce que**
la au moins une couche photovoltaïque (280) et la au moins une couche luminescente (210) du module (200) sont agencées côte à côte ou l'une dans l'autre le long du plan de module (HE) du module (200).

7. Le procédé d'après l'une des revendications de 1 à 6,
**caractérisé en ce que**
a. le module (200) comprend au moins une couche d'encapsulation flexible (270) pour protéger la au moins une couche luminescente (210) et la au moins une couche photovoltaïque (280) contre les influences environnementales,
b. sachant que l'élément de support (260) et/ou la couche d'encapsulation (270) sont translucides au moins par sections.

8. Le procédé d'après l'une des revendications de 1 à 7,
**caractérisé en ce que**
a. la dalle de pavage (300) comprend au moins un capteur (340) pour la commande automatique d'au moins une couche luminescente (210) du module (200),
b. sachant que le au moins un capteur (340) comprend un capteur de présence choisi parmi un capteur radar et un capteur infrarouge.

9. Le procédé d'après l'une des revendications de 1 à 8,
**caractérisé par l'étape consistant à :**
durcir au moins une couche (210, 220, 230, 240, 270, 280, 290) du module (200) par une irradiation de la couche avec une lumière infrarouge.
